# EUROPÄISCHE PATENTANMELDUNG

(11) **EP 2 236 884 A1**
(43) Veröffentlichungstag der Anmeldung: **06.10.2010**
(21) Anmeldenummer: 10153394.1
(22) Anmeldetag: 12.02.2010
(51) Int. Cl.: F16L 3/13, F16L 3/133

(54) **Festklemmvorrichtung für eine Rohrleitung**

(30) Priorität: 03.04.2009 DE 102009003733
(71) Anmelder: ContiTech Kühner GmbH & Cie. KG, 71570 Oppenweiler (DE)
(72) Erfinder: Schnepf, Uli, 71570, Sulzbach-Murr (DE); Tokic, Zeljko, 71573, Allmersbach (DE)
(74) Vertreter: Finger, Karsten

(57) **Zusammenfassung**

Eine Festklemmvorrichtung für eine Rohrleitung in Kraftfahrzeuganlagen weist ein an einem Fahrzeugbauteil befestigbares, eine Halterung darstellendes, schellenartiges Klemmteil auf, das an seinem einen Ende eine die Rohrleitung umgreifende, elastisch auffedemde Klemmwand trägt. Die Klemmwand ist mit inneren Erhebungen versehen. Um eine drehfeste und axial unverschiebbare Fixierung des Klemmteils auch bei nicht abgewinkelten Rohrleitungen ohne Schweißen, Löten oder Kleben zu erreichen, weist das schellenartige Klemmteil (5) eine in Richtung Klemmteil (5) eingerollte Klemmwand (8) mit mindestens zwei voneinander umfangsmäßig beabstandeten, nach innen vorstehenden Erhebungen (12) auf, die im montierten Zustand der Rohrleitung (9) in korrespondierende Einbuchtungen (14) im Außenumfang der Rohrleitung (9) formschlüssig eingreifen.

## Beschreibung

Die Erfindung betrifft eine Festklemmvorrichtung für eine Rohrleitung in Kraftfahrzeuganlagen, insbesondere für eine Rohrleitung in Kraftfahrzeugklimaanlagen, die ein an einem Fahrzeugbauteil befestigbares, eine Halterung darstellendes, schellenartiges Klemmteil aufweist, das an seinem einen Ende eine die Rohrleitung umgreifende, elastisch auffedernde Klemmwand trägt, wobei die Klemmwand mit inneren Erhebungen versehen ist.

Aus der DE 40 13 162 C2 ist eine Festklemmvorrichtung für Rohrleitungen bekannt, die ein Klemmteil mit einer Klemmwand aufweist. Die Klemmwand umgreift die zu befestigende Rohrleitung. Die mit dem Klemmteil verbundene Montagelasche dient zum Befestigen der Festklemmvorrichtung an einem Fahrzeugbauteil. Zwischen der Rohrleitung und dem Klemmteil ist eine thermisch kontraktionsfähige Kunststoffhülse angeordnet, die auf dem Innenumfang eine Bindeschicht eines Heißschmelzklebers aufweist. Die federnd aufweitbare Klemmwand ist mit einer Anzahl von Vorsprüngen versehen, die sich von ihrer inneren Umfangswand nach innen erheben. Die Klemmwand wird elastisch an die äußere Umfangsfläche der Kunststoffhülse gedrückt, welche durch die Bindeschicht aus dem Heizkleber an die Rohrleitung gebunden ist. In dieser Lage werden die Vorsprünge unter Druck in die Kunststoffhülse gepresst. Nachteilig bei dieser Festklemmvorrichtung ist das zum Festsetzen der Rohrleitung in der Festklemmvorrichtung notwendige separate Bauteil, die Kunststoffhülse sowie die Bindeschicht.

Die aus der DE 38 38 822 C2 bekannte Festklemmvorrichtung benötigt zur Fixierung der Rohrleitung eine Abwinkelung derselben, da ansonsten weder die Drehfestigkeit, noch die axiale Fixierung gegeben sind. Die Festklemmvorrichtung weist ein schellenartiges Klemmteil auf, das mit einer elastischen Klemmwand mit segmentartigem Querschnitt versehen ist. Die axiale Fixierung wird durch die in bestimmter Form abgewinkelte Rohrleitung erreicht, die mit dem schellenartigen Klemmteil korrespondiert. In vielen Anwendungsfällen ist jedoch eine Abwinkelung der Rohrleitung nicht erwünscht.

Der Erfindung liegt die Aufgabe zugrunde, eine Festklemmvorrichtung der eingangs beschriebenen Art zu schaffen, die eine drehfeste und axial unverschiebbare Fixierung der Halterung auch bei nicht abgewinkelten Rohrleitungen ohne Schweißen, Löten oder Kleben ermöglicht.

Die Aufgabe wird erfindungsgemäß dadurch gelöst, dass das schellenartige Klemmteil eine in Richtung Klemmteil eingerollte Klemmwand mit mindestens zwei voneinander umfangsmäßig beabstandeten, nach innen vorstehenden Erhebungen aufweist, die im montierten Zustand der Rohrleitung in korrespondierende Einbuchtungen im Außenumfang der Rohrleitung formschlüssig eingreifen.

Durch das formschlüssige Eingreifen der Sicken in die Einbuchtungen, z.B. Einprägungen oder Eindrückungen, in der Oberfläche der Rohrleitung wird ein Verrutschen des Klemmteils relativ zur Rohrleitung verhindert. Ein Verdrehen des Klemmteils auf der Medium führenden Rohrleitung ist nicht möglich. Im Fahrbetrieb wird ein Verdrehen beispielsweise einer Klimaleitung durch die erfindungsgemäße Ausbildung verhindert.

Es kann durch die erfindungsgemäße Ausbildung nicht zu Lagefehlern der Rohrleitung kommen, weil kein wärmeeintragender Löt- oder Schweißprozess zum Festsetzen des Klemmteils auf der Rohrleitung, die üblicherweise aus Metall ist, notwendig ist, der zu Verziehungen der Rohrleitung führen könnte. Dieses Verziehen der Rohrleitung kann zu Problemen beim Einbau der Rohrleitung führen.

Außerdem ist eine schnelle und einfache Montage der Rohrleitungen möglich. Auch ein nachträgliches Einbauen einer eindeutig zum Klemmteil positionierten Rohrleitung ist möglich.

In vorteilhafter Ausgestaltung der Erfindung verlaufen die Erhebungen quer über die Breite der Klemmwand und die Einbuchtungen achsparallel und korrespondierend zu den Erhebungen. Dadurch sind Erhebungen und Einbuchtungen einfacher herstellbar und die Montage wird erleichtert.

In weiterer vorteilhafter Ausgestaltung der Erfindung ist das Klemmteil aus Kunststoff. Die Verwendung von Kunststoff statt Metall, wie z.B. Stahl, verhindert das Entstehen einer Spaltkorrosion in der Fügestelle.

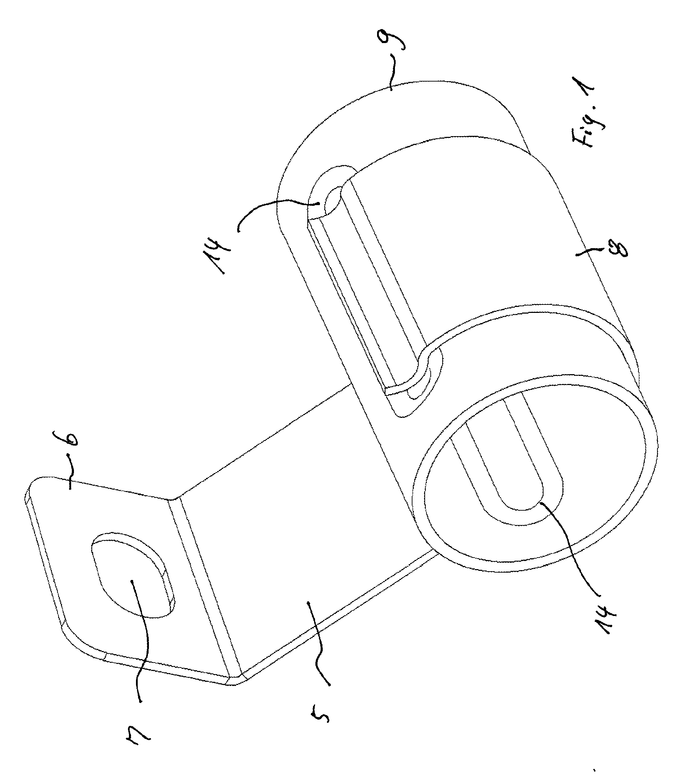

Anhand der Zeichnung wird nachstehend ein Ausführungsbeispiel der Erfindung näher erläutert. Es zeigt
- Fig. 1: eine Festklemmvorrichtung mit einem Klemmteil, das eine nach innen gebogene, elastische Klemmwand aufweist, in die eine Rohrleitung eingeklippst ist;

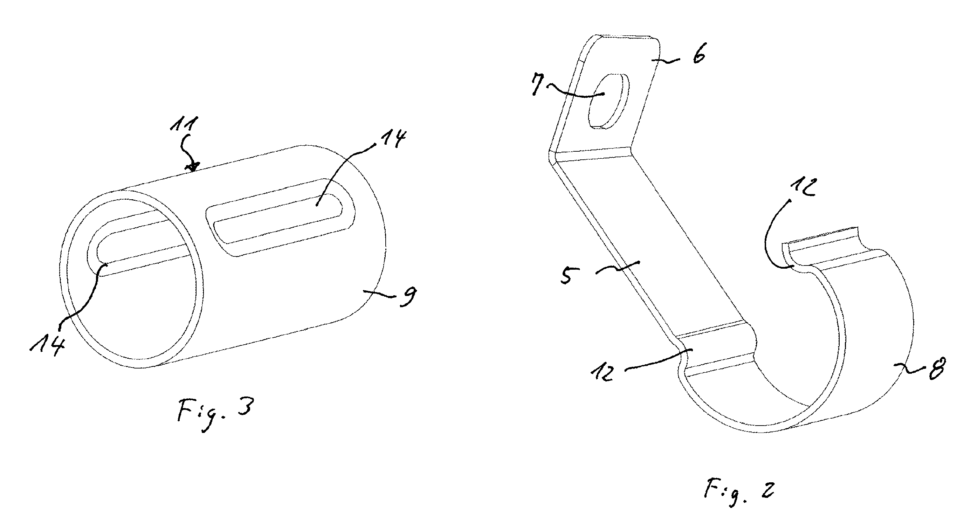

- Fig. 2: in Einzeldarstellung das Klemmteil in perspektivischer Ansicht;
- Fig. 3: einen Abschnitt einer Rohrleitung mit achsparallel im Außenumfang angeordneten Einprägungen.

Ein schellenartiges Klemmteil 5 weist an seinem einen Ende eine abgeknickte Montagelasche 6 auf, in der eine Durchgangsbohrung 7 zum Befestigen des Klemmteils 5 auf einer Fläche eines hier nicht dargestellten Fahrzeugaggregates vorhanden ist. Am anderen Ende weist das Klemmteil 5 über seine gesamte Breite eine nach innen eingerollte, elastische Klemmwand 8 mit segmentartigem Querschnitt auf.

Mittels der elastischen, eine nach innen gerichtete Vorspannung aufweisenden Klemmwand 8 klammert das Klemmteil 5 an einem in der Fügestelle von Klemmteil 5 und einer Rohrleitung 9 liegenden Längsabschnitt 11 dieser Rohrleitung 9, die nur ausschnittsweise dargestellt ist. Die Klemmwand 8 ist bei der Montage der Rohrleitung 9 elastisch aufweitbar und klippst nach Einsetzen der Rohrleitung 9 wieder gegen diese zurück.

Die Klemmwand 8 ist mit der Oberfläche des Außenumfangs der Rohrleitung 9 über achsparallel verlaufende, innere Erhebungen 12 im Eingriff, um die Rohrleitung 9 festzuklemmen. Dabei greifen die Erhebungen 12 in Einbuchtungen 14, die als Sicken eingeprägt sind, in der Oberfläche der Rohrleitung 9 ein.

Die Rohrleitung 9 weist an entsprechender Fügestelle jeweils zwei um ca. 270° auf dem Umfang gegeneinander versetzt angeordnete Sicken 14 auf. Die winkelmäßige Anordnung kann je nach dem speziellen Einbau variieren.

### Bezugszeichenliste

### (Teil der Beschreibung)

- 5: Klemmteil
- 6: Montagelasche
- 7: Durchgangsbohrung
- 8: Klemmwand
- 9: Rohrleitung
- 11: Längsabschnitt
- 12: innere Erhebungen
- 14: Sicken

## Patentansprüche

1. Festklemmvorrichtung für eine Rohrleitung in Kraftfahrzeuganlagen, insbesondere für eine Rohrleitung in Kraftfahrzeugklimaanlagen, die ein an einem Fahrzeugbauteil befestigbares, eine Halterung darstellendes, schellenartiges Klemmteil aufweist, das an seinem einen Ende eine die Rohrleitung umgreifende, elastisch auffedernde Klemmwand trägt, wobei die Klemmwand mit inneren Erhebungen versehen ist,
**dadurch gekennzeichnet,**
**dass** das schellenartige Klemmteil (5) eine in Richtung Klemmteil (5) eingerollte Klemmwand (8) mit mindestens zwei voneinander umfangsmäßig beabstandeten, nach innen vorstehenden Erhebungen (12) aufweist, die im montierten Zustand der Rohrleitung (9) in korrespondierende Einbuchtungen (14) im Außenumfang der Rohrleitung (9) formschlüssig eingreifen.

2. Festklemmvorrichtung nach Anspruch 1, **dadurch gekennzeichnet,**
**dass** die Erhebungen (12) quer über die Breite der Klemmwand (8) verlaufen,
**dass** die Einbuchtungen (14) achsparallel und korrespondierend zu den Erhebungen (12) verlaufen.

3. Festklemmvorrichtung nach Anspruch 1, **dadurch gekennzeichnet,**
**dass** das Klemmteil (5) aus Kunststoff ist.
